(19) Europäisches Patentamt
European Patent Office
Office européen des brevets

(11) EP 1 342 534 A2

(12) EUROPEAN PATENT APPLICATION

(43) Date of publication:
10.09.2003 Bulletin 2003/37

(51) Int Cl.⁷: **B23Q 17/09**

(21) Application number: 03251145.3

(22) Date of filing: 26.02.2003

(84) Designated Contracting States:
**AT BE BG CH CY CZ DE DK EE ES FI FR GB GR
HU IE IT LI LU MC NL PT SE SI SK TR**
Designated Extension States:
**AL LT LV MK RO**

(30) Priority: 28.02.2002 JP 2002054698
04.10.2002 JP 2002292809

(71) Applicant: **FANUC LTD**
**Minamitsuru-gun, Yamanashi 401-0597 (JP)**

(72) Inventor: **Yasugi, Kuniharu**
**Minamitsuru-gun, Yamanashi, 401-0304 (JP)**

(74) Representative: **Billington, Lawrence Emlyn**
**Haseltine Lake & Co.**
**Imperial House**
**15-19 Kingsway**
**London WC2B 6UD (GB)**

(54) **Tool abnormality detecting device**

(57)     There is provided a tool abnormality detecting device capable of precisely detecting an abnormality of a tool of a machine tool and timely requiring a change of the tool. Disturbance torques ys and yz exerted on a spindle motor and a Z-axis feed motor, respectively, in machining are estimated and stored in a data table(S1). Averages ysav 1 and yzav1 of ys and yz, respectively, in a period from a point of time preceding the present time by a time period T1 to the present time are obtained as presumed present loads (S3). Running thresholds are determined based on averages ysav23 and yzav23 of ys and yz, respectively, in a period from a point of time preceding the present time by a time period T2 to a point of time preceding the present time by a time period T3 (T1<T2<T3)(S4). The presumed present loads ysav 1 and yzav1 are compared with the running thresholds, respectively (S6), and if any of the presumed present loads ysav 1 and yzav1 deviates from the running threshold, it is discriminated that an abnormality of the tool occurred and a signal requesting a change of the tool is issued after the present machining cycle (S7). The running threshold may be determined based on an average waveform of the disturbance torque in a plurality of past machining cycles.

FIG. 5

START

CALCULATE ys AND yz AND STORE CALCULATED VALUES IN DATA TABLE — S1

S2 — t0 LAPSED? — No

Yes

CALCULATE ysav1 AND yzav1 FROM POINT OF TIME PRECEDING BY T1 TO PRESENT — S3

CALCULATE ysav23 AND yzav23 FROM POINT OF TIME PRECEDING BY T3 TO POINT OF TIME PRECEDING BY T2 — S4

DETERMINE RUNNING THRESHOLDS ysth1, ysth1, ysth2, ysth2 — S5

S6 — ysth2≦ysav1≦ysth1 AND yzth2≦yzav1≦zsth1? — Yes

No

ISSUE SIGNAL REQUIRING TOOL CHANGE AFTER COMPLETING PRESENT MACHINING CYCLE — S7

END

**Description**

The present invention relates to a device for automatically detecting an abnormality of a tool occuring at a breakage of the tool or immediately before the breakage of the tool in machining by the tool, and preferably for requiring a change of the tool when the abnormality of the tool is detected. The present invention provides a technique applicable to almost all technical fields of machining using a tool, and is advantageously applied particularly to drilling, tapping and milling, etc. by a machining center.

In general, cutting resistance of a tool for machining increases as total time of machining increases, because of abrasion of a cutting edge of the tool, to ultimately bring a breakage of the tool. As the abrasion of the cutting edge advances, the machining precision is lowered to make it difficult to maintain the machining precision required for a machined workpiece. A device for automatically detecting an abnormality of a tool caused by chip packing and wear limit, etc. has been developed so as to cope with automatic machining for a long time period, and is called a tool abnormality detecting device.

In such tool abnormality detecting device, a cutting load is detected continuously based on a driving current or a driving power of a spindle motor and/or at least one of feed axis motors. The detected load is compared with a threshold which is a predetermined constant value to discriminate an abnormality of the tool.

There is disclosed a technique for detecting an abnormal load caused by a collision between a conveying device and a feed table of a machine tool and so forth in Japanese Patent Publication No. 2002-1633. In this technique, it is described that a discrimination level for detecting an abnormal load is set based on an average of an actual load in several past machining cycles in view that a motor torque is made larger at beginning cycles of the machining immediately after the power is turned on than at steady state because of insufficient lubrication of the machine.

However, there has arisen the following problem in the above-mentioned tool abnormality detecting device. A load torque of the spindle motor and a load thrust of at least one of the feed axes motors change if a cutting condition such as a rotational speed of the spindle and/or a feed rate of the feed axes is changed even if the same workpiece is machined by the same tool of the same machine using the same cutting fluid. Therefore, it is difficult to set an appropriate common threshold of the load torque/thrust for detecting a tool breakage. In practice, the threshold has been set based on experience of an operator or measured values in test machining each time before an actual machining. This cumbersome setting operation has been a cause of lowering efficiency of the machining.

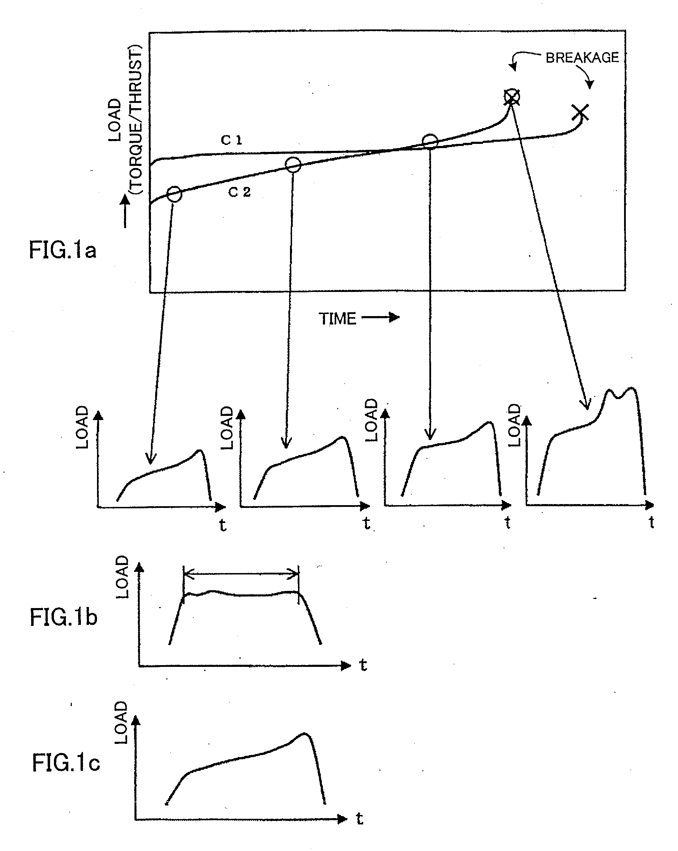

Further, a load torque curve of the spindle motor and a load thrust curve of the feed axis motor change in absolute value of the load at the beginning of machining, and a rate of increase of the load in the midst of machining, if a workpiece or a tool is changed to a new one having the same specification even if the machining condition is not changed. A transition curve of the load torque/thrust is schematically shown in FIG. 1a. In FIG. 1a, a curve C1 represents the load in cutting a workpiece a1 by a tool b1, and a curve C2 represents the load in cutting a workpiece a2 having the same specification as the workpiece a1 by a tool b2 having the same specification as the tool b1. A symbol x indicates an occurrence of a breakage of the tool.

As can be seen from FIG. 1a, the curves C1 and C2 are different in the absolute value of the load at the beginning of machining and the rate of increase of the load in the midst of the machining, and it would be difficult to set an appropriate threshold for precisely detecting a breakage of the tool specifically in the case where the difference of the curves is large.

The above-mentioned Japanese Patent Publication No. 2002-1633 refers to setting of abnormality determination level based on an average value of the actual load in several past machining cycles. However, this document does not refer to the detection of an abnormality of the tool to cope with the difference of the transition of the cutting load in the case of changing a workpiece or a tool to a new one of the same specification under the same machining condition, as shown in FIG. 1a.

It is desirable to provide a tool abnormality detecting device capable of precisely detecting a breakage of the tool or a status of the tool immediately before the breakage to enable a timely change of the tool by automatically determining an appropriate threshold of a load torque and/or thrust of the tool for discriminating a breakage of the tool irrespective of a machining condition and kinds of tool, workpiece and machine tool.

According to the present invention, a cutting load exerted on a spindle motor and/or at least one of feed axes motors is monitored on the basis of an average or a maximum in the case as shown in FIG. 1b or on the basis of a waveform pattern in one machining cycle in the case as shown in FIG. 1c in a predetermined period, and an abnormality of the tool is discriminated based on comparison of the cutting load with a threshold.

The threshold is not set to a common constant value but is determined based on a running reference of the cutting load which has been detected in a period preceding the present time in machining.

Specifically, an average or a maximum of the cutting load can be adopted as the reference for determining the threshold in a case where the cutting load is deemed to be constant in each machining cycle, such as drilling, as shown in FIG. 1b. A waveform of the cutting load in machining can be adopted as the reference for determining the threshold in a case where the cutting load varies in each machining cycle, such as tapping, as shown in FIG. 1c.

A tool abnormality detecting device for detecting an abnormality of a tool of a machine tool of the present invention may comprise:

cutting load detecting means for detecting a cutting load on a spindle motor and/or a cutting load on a feed axis motor in machining by the machine tool; present load presuming means for obtaining at least one of an average and a maximum of the cutting load detected by the cutting load detecting means in a fist period as a presumed present load; threshold determining means for determining a running threshold based on at least one of an average and a maximum of the cutting load detected by the cutting load detecting means in a second period longer than the first period; discriminating means for discriminating an abnormality of the tool based on a comparison between the presumed present load with the running threshold.

The running threshold may be determined according to any of the following processes (1)-(3).

(1) The average, the maximum or the waveform pattern of the cutting load for the second period is multiplied by a predetermined coefficient.

(2) A predetermined value is added to or subtracted from the average, the maximum or the waveform pattern of the cutting load for the second period.

(3) The running threshold is determined based on an average, a maximum or the waveform pattern of the cutting load from a point of time preceding a present time by a third period longer than the second period to a point of time preceding the present time by the second period.

It is preferable that the discriminating means comprises means for issuing a signal requiring a change of the tool based on discrimination of an abnormality of the tool.

The discriminating means may discriminate an abnormality of the tool when the presumed present load exceeds the running threshold, or when the presumed present load is lower than the running threshold.

Further, the threshold determining means may determine a first running threshold and a second running threshold smaller than said first running threshold, and the discriminating means may discriminate an abnormality of the tool when the presumed present load exceeds the first running threshold or is less than the second running threshold.

The present invention notes that status of a cutting load greatly changes at a breakage of a tool or immediately before the breakage of the tool in comparison with the status of the cutting load preceding the breakage by a considerable time period, which has been changed due to abrasion of the tool. The status of the tool is monitored by the cutting load detecting means in the machining. An average or a maximum of the cutting load at each sampling period for a period from a point of time preceding the present time by a time period T1 to the present time is obtained as the presumed present load. An average or a maximum of the cutting load at each sampling period for a period, e.g. several seconds to several tens of seconds, is obtained based on data of the cutting load from a point of time preceding the present time by a time period T2 to the present time.

Further, the running threshold may be determined based on the data of the cutting load for a period from a point of time preceding the present time by a time period T3 longer than the time period T2.

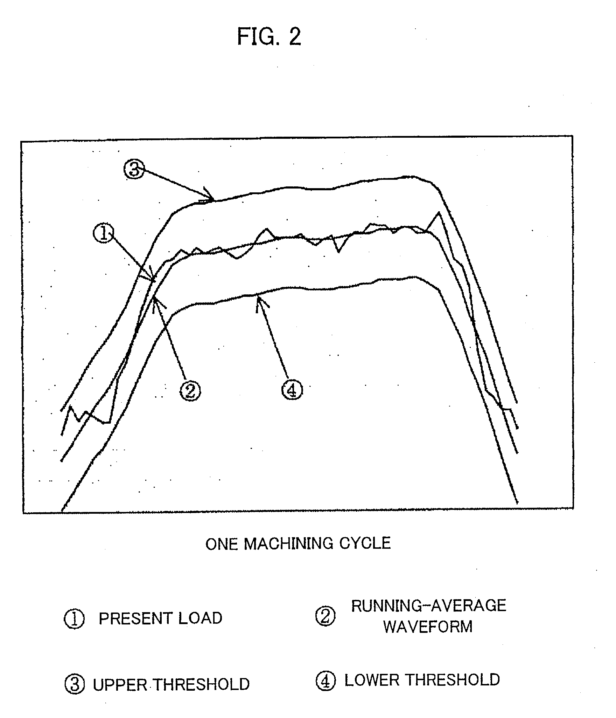

On the other hand, in the case of adopting the waveform pattern of a cutting load as the reference for determining the running threshold, an average waveform of the cutting load is obtained based on the data of the cutting load in a plurality of past machining cycles, as shown in FIG. 2. The running threshold is determined as a band region by multiplying data of the average waveform by a predetermined coefficient, or adding/subtracting a predetermined value to/form the data of the average waveform.

BRIEF DESCRIPTION OF THE DRAWINGS

FIG. 1a is a graph showing transition of a cutting load in series of machining cycles of machining workpieces of the same specification by a different tool of the same specification in the same machining condition; FIG. 1b is an example of a waveform of the cutting load in one machining cycle for which a running threshold is determined based on an average or the maximum of the cutting load; FIG. 1c is an example of a waveform of the cutting load in one machining cycle on which a running threshold is determined based on the waveform;

FIG. 2 is a graph showing a running threshold determined by setting an upper limit and a lower limit with respect to an average waveform;

FIG. 3 is a block diagram of a hardware configuration of a computerized numerical controller (CNC) which functions as the tool abnormality detecting device according to an embodiment of the present invention;

FIG. 4 is a functional block diagram showing processing of detecting an abnormality of a tool;

FIG. 5 is a flowchart of the processing of detecting an abnormality of the tool;

FIG. 6 is a graph showing an example of transition of waveforms of respective disturbance torques of a spindle motor and a Z-axis feed motor at a beginning stage of a series of cutting cycles;

FIG. 7 is a graph showing transition of waveforms of the estimated disturbance torques of the spindle motor and the Z-axis feed motor in cutting cycles at a middle stage;

FIG. 8 is a graph showing transition of waveforms of the respective disturbance torques of the spindle motor and the Z-axis feed motor in cutting cycles before an breakage of the tool;

FIG. 9 is a graph showing transition of waveforms of the respective disturbance torques of the spindle motor and the Z-axis feed motor in cutting cycles including a cutting cycle in which the breakage occurred;

FIG. 10 is a graph showing another example of transition of waveforms of the respective disturbance torques of the spindle motor and the Z-axis feed motor in cutting cycles at a beginning stage;

FIG. 11 is a graph showing transition of waveforms of the respective disturbance torques of the spindle motor and the Z-axis feed motor in cutting cycles at a middle stage;

FIG. 12 is a graph showing transition of respective waveforms of the estimated disturbance torques of the spindle motor and the Z-axis feed motor in cutting cycles before a breakage of the tool;

FIG. 13 is a graph showing transition of respective waveforms of the estimated disturbance torques of the spindle motor and the Z-axis feed motor in cutting cycles including a cutting cycle in which the breakage occurred;

FIG. 14 is a table showing a result of comparison of the present load with an average waveform of the past five cutting cycles; and

FIG. 15 is a schematic diagram showing determination of the running threshold and comparison between the running threshold and the estimated present load in the series of machining cycles.

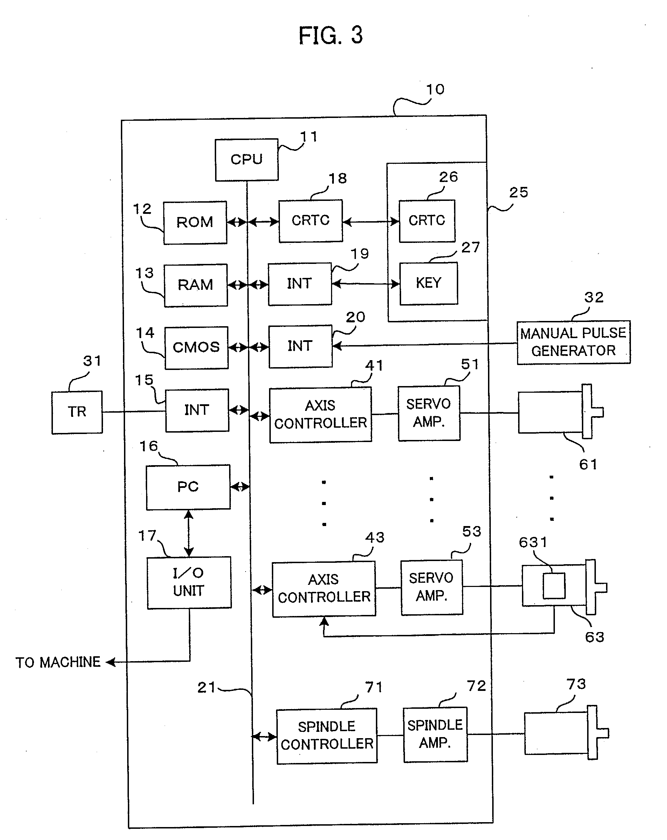

FIG. 3 shows a hardware constitution of a computerized numerical control (CNC) device which functions as a tool abnormality detecting device according to an embodiment of the present invention. In FIG. 3, a numerical controller 10 has a processor 11 for generally controlling the whole system. The processor 11 reads a system program stored in a ROM 12 via a bus 21, and executes the control of the whole of the controller 10. A RAM 13 in the form of DRAM, for example, temporarily stores calculation data, display data, etc.

A CMOS 14 stores a machining program and various parameters. The machining program includes position data of a plurality of commanded points for defining a machining path. The CMOS 14 is backed up by a battery (not shown) to function as a nonvolatile memory in which data is not erased even if the power source of the numerical controller 10 is turned off.

An interface 15 is connected with an external device 31 such as a off-line programming device and a printer so as to perform input/output with the external device. When a machining program is prepared by using the off-line programming device, data of the machining program are read by the numerical controller 10 via the interface 15. The data of the machining program edited by the numerical controller 10 can be outputted through the printer.

A PC (programmable controller) 16, which is incorporated in the controller 10, controls the machine by means of a sequence program prepared in a ladder form. Specifically, the PC 16 converts data into signals necessary for the sequence program in accordance with various functions specified by the machining program, and sends out them to the machine side (in this example, the drilling machine having three feed axes) through an I/O unit 17. These output signals operate various operation parts (air cylinder, screw, electric actuator, etc.) on the machine. Also, the PC 16 receives signals from various switches on the machine and a machine control panel, performs necessary processing on them and sends them to the processor 11.

The PC 16 detects an abnormality of the tool according to the present invention and issues a signal for requiring a change of the tool when the abnormality is detected. The details of the processing will be described later.

A graphic control circuit 18 converts digital data such as the present position of each axis (of three axes in this example), alarm, parameter and image data into an image signal, and outputs them. This image signal is sent to a display device 26 in a CRT/MDI unit 25, and is displayed on the display device 26. An interface 19 receives data from a keyboard 27 in the CRT/MDI unit 25, and sends them to the processor 11.

An interface 20, which is connected to a manual pulse generator 32, receives pulses from the manual pulse generator 32. The manual pulse generator 32 is mounted on the machine control panel and can be used for manual operation to move and position a movable part of the machine body including a work table.

Axis control circuits 41 to 43 receive motion commands for respective axes from the processor 11, and issue torque commands to the servo amplifiers 51 to 53. The servo amplifiers 51 to 53 drive servomotors for respective axes (a X-axis motor 61, a Y-axis motor 62 and a Z-axis motor 63) based on the torque commands. The servomotors 61 to 63 for respective axes drive basic three axes (X-axis, Y-axis and Z-axis) of the machine.

A pulse coder 631 as a position detector is provided at the servomotor 63 for driving Z-axis. Although not shown in the figure, each of the servomotors 61 and 62 for other axes is similarly provided with a pulse coder. The output pulse of the pulse coder is used to generate a position feedback signal and a speed feedback signal.

A spindle control circuit 71 receives a spindle rotation command, and sends out a spindle speed signal to a spindle amplifier 72. The spindle amplifier 72 receives the spindle speed signal and rotates a spindle motor 73 at the commanded rotational speed, to rotate a tool (e.g. a drill, a ball end mill) attached to the spindle of the machine. The number of servo-controlled axes (except the spindle axis) are three in this example, however, the number of servo-controlled axes may increase or decrease in accordance with a kind of the machine.

Thus, the hardware configuration and basic functions of the numerical controller as described may be the same as those of an ordinary numerical controller, not requiring a special change. According to the present invention, the numerical controller is provided with software means for executing the following processing so as to function as the tool abnormality detecting device. In this embodiment, the processing for detecting an abnormality of the tool is executed by the PC 16 in accordance with the software.

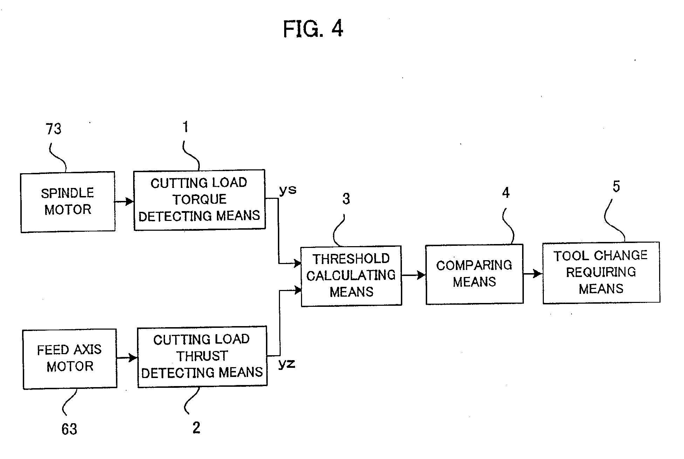

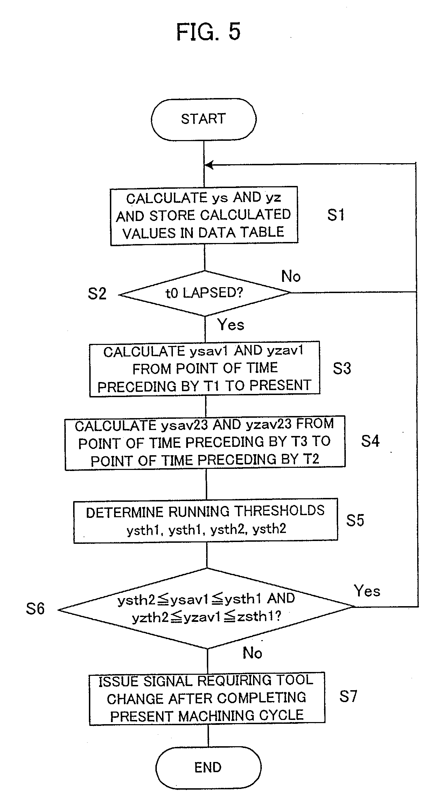

The processing for detecting an abnormality of the tool will be described referring to the block diagram of FIG. 4 and the flowchart of FIG. 5.

In FIG. 4, cutting load torque detecting means 1 for the spindle motor 73 estimates a disturbance torque ys acting on the spindle motor 73 based on the velocity feedback signal of the spindle motor 73 and the torque command to the spindle motor 73. Similarly, a cutting load thrust detecting means 2 for the feed axis motor (e.g. the Z-axis motor 63 in this embodiment) estimates a disturbance torque yz acting on the Z-axis motor 63 based on the velocity feedback signal of the Z-axis motor 63 and the torque command for the Z-axis motor 63.

The disturbance torque ys and the disturbance torque yz are calculated in the machining at every predetermined period which is sufficiently shorter than a period of one machining cycle, e.g. a drilling operation of one hole, and stored in the memory, e.g. the CMOS 14 or a memory provided at the PC 16, as load data with time information, so that the PC 16 can access the load data of ys and yz in the memory by designating a specific period.

Threshold calculation means 3 calculates at least one threshold value for determination of an abnormality of the tool based on the stored data of "ys" and "yz" in a period designated on the basis of the present time, i.e. the present processing period. The threshold value can be calculated in one of the following processes (1)-(5).

For the following processes, parameters of a first time period T1 (approximately one second, for example), a second time period T2 (several seconds to several tens of seconds, for example) quite longer than the first time period T1, and further in the case of processes (3) and (4) a third time period T3 still longer than the second time period T2 (by several seconds to several tens of seconds, for example) are set in advance as parameters in the CMOS 14 or the memory provided at the PC16. In any of the following processes, respective averages of the stored data "ys" and the stored data "yz" in a period from a point in time preceding the present time by the time period T1 to the present time are calculated as presumed present loads of the spindle motor and the Z-axis motor, respectively.

(1) Respective averages of the stored data "ys" and the stored data "yz" in a period from a point of time preceding the present time by the time period T2 to the present time are calculated. The running thresholds for the spindle motor and the Z-axis motor are determined by multiplying the averages of the stored data "ys" and the stored data "yz" by predetermined coefficients, respectively.

(2) Respective averages of the stored data "ys" and the stored data "yz" in a period from a point of time preceding the present time by the time period T2 to the present time are calculated. The running thresholds for the spindle motor and the Z-axis motor are determined by adding/subtracting predetermined values to/from the averages of the stored data "ys" and the stored data "yz", respectively.

(3) Respective averages of the stored data "ys" and the stored data "yz" in a period from a point in time preceding the present time by the time period T3 to a point in time preceding the present time by the time period T2 are calculated. The running thresholds for the spindle motor and the Z-axis motor are determined by multiplying the averages of the stored data "ys" and the stored data "yz" by predetermined coefficients, respectively.

(4) Respective averages of the stored data "ys" and the stored data "yz" in a period from a point in time preceding the present time by the time period T3 to a point in time preceding the present time by the time period T2 are calculated. The thresholds for the spindle motor and the Z-axis motor are determined by adding/subtracting predetermined values to/from the averages of the stored data "ys" and the stored data "yz", respectively.

(5) An average waveform is obtained based on respective averages of the stored corresponding data "ys" and the stored corresponding data "yz" between respective starts and ends of a plurality of past cutting cycles preceding the present cutting cycle. Each of the running thresholds is determined by a range defined by setting an upper limit and a lower limit with respect to the average waveform.

The threshold calculation means 3 calculates at least one threshold for each of the spindle motor and the feed axis motor according to one of the above processes. In general, there is a possibility of occurring an abnormality of the tool not only in a case where an excessive load is exerted on the tool but also in a case where a too small load is exerted on the tool in the machining. Thus, it is preferable to calculate and set two threshold values, i.e. an upper threshold for the excessive load and a lower threshold for the too small load for each of the spindle motor and the feed axis motor.

Comparison means 4 discriminates an abnormality of the tool based on a comparison between the presumed present load and the threshold value or values. For example, if it is determined that the presumed present load exceeds the threshold value defining the upper limit or become lower than the threshold value defining the lower limit, the comparison means 4 discriminates that there occurred an abnormality of the tool.

The tool change requiring means 5 issues a signal for changing the tool with new one based on the discrimination of abnormality of the tool by the comparison means 4. In response to the tool change signal, a graphical message to require a change of the tool and further data of the discrimination are displayed on the display device 26 of the MDI unit 25. Further, an alarm may be issued to stop the machining, if necessary.

The processing of determination of an abnormality of the tool is described further in detail referring to the flowchart of FIG. 5. In this example, the running threshold is determined according to the process (3).

The following description will be made from a start of the actual machining in the fist machining cycle, i.e. a drilling of a first hole. The start of the actual machining is an instance after a time $\Delta t$ from the issuance of a start command of the machining cycle. The time $\Delta t$ is determined to be a value obtained by adding a minute time period to the time period from the issuance of the start command to the actual start of the machining with the tip of the tool is brought into contact with the workpiece.

Step S1/S2: The disturbance torque ys exerted on the spindle motor and the disturbance torque yz exerted on the Z-axis feed motor are estimated and the calculated values are stored in a data table. The processing of Step S1 is repeatedly executed at every predetermined sampling period until the time period t0 lapses from the start of the machining, so that the data of "ys" and "yz" at every predetermined period are stored in the data table. The time period t0 is set to be a little longer than the time periods T1, T2 and T3. In the case of not using the time period T3, the time t0 is set a little longer than the time period T2. After the time t0 lapsed, the date necessary for calculating the average values are prepared.

Step S3: The data of ys and yz from a point of time preceding the present time by the time period T1 to the present time are read from the data table. The averages ysav1 and yzav1 of the data of ys and yz, respectively, are obtained as the presumed present loads of the spindle motor and the Z-axis feed motor. Alternatively, the maximum values of the data ys and yz may be adopted as the presumed present loads of the spindle motor and the Z-axis feed motor, respectively.

Step S4: The data of ys and yz from a point of time preceding the present time by the time period T2 to a point of time preceding the present time by the time period T3 are read and averages ysav 23 and yzav23 of the read data of ys and yz, respectively, are calculated. Alternatively, the data of ys and yz from a point of time preceding the time period T2 to the present time are read and the averages ysav 2 and yzav2 of the read data may be calculated.

Step S5: One or two running thresholds are determined for each of the spindle motor and the Z-axis feed motor based on ysav23 and yzav23, respectively. In this embodiment, the upper thresholds ysth1 and yzth1 defining the upper limits for the spindle motor and the Z-axis feed motor, respectively are determined, and the lower thresholds ysth2 and yzth2 defining the lower limits for the spindle motor and the Z-axis feed motor, respectively, are determined. The running thresholds may be determined according to any of the processes (1)-(5) as described. In this embodiment, the upper thresholds ysth1 and yzth1, and lower thresholds ysth2 and yzth2 are determined by multiplying the average values ysav23 and yzav23 by 1.3 and 0.7, respectively, as follows;

$$ysth1 = 1.3 \times ysav23$$

$$yzth1 = 1.3 \times yzav23$$

$$ysth2 = 0.7 \times ysav23$$

$$yzth2 = 0.7 \times yzav23$$

In the case of adopting the average values ysav2 and yzav2 for determine the running thresholds, the upper and lower thresholds for the spindle motor and the Z-axis motor may be determined according to the following equations.

$$ysth1 = 1.4 \times ysav2$$

$$yzth1 = 1.4 \times yzav2$$

$$ysth2 = 0.7 \times ysav2$$

$$yzth2 = 0.7 \times yzav2$$

Alternatively, the running thresholds may be determined by adding predetermined values Δ1 - Δ4 to the average values ysav2 and yzav2, as follows;

$$ysth1 = ysav2 + \Delta1$$

$$yzth1 = yzav2 + \Delta2$$

$$ysth2 = ysav2 - \Delta3$$

$$yzth2 = yzav2 - \Delta4$$

Step S6: The presumed present loads ysav1 and yzav1 are compared with the running thresholds ysth1, ysth2 and yzth1, yzth2, respectively. In particular, it is determined whether or not the presumed present load ysav1 of the spindle motor is within the range defined by the upper threshold ysth1 and the lower threshold ysav2, and whether or not the presumed present load yzav1 of the Z-axis feed motor is within the range defined by the upper threshold yzth1 and the lower threshold yzav2. If it is determined that the presumed present load ysav1 deviates from the range ysth1-ysth2, or that the presumed present load yzav1 deviates from the range yzth1-yzth2, it is discriminated that an abnormality of the tool occurred and the procedure proceeds to Step S7. If it is determined that the presumed present load ysav1 is within the range ysth1 - ysth2 and that the presumed present load yzav1 is within the range yzth1-yzth2, the procedure returns to Step S1 and the processing of Steps S1-S6 is repeatedly executed. In the subsequent processing periods, the sampling of data is performed at Step S1 after the time Δ t lapses from the issuance of the machining start command for each machining cycle, and a command for terminating the machining cycle is not issued, for collecting the data in the actual machining. The machining start command and the machining terminating command are issued for each machining cycle.

Step S7: After completion of the present machining cycle, a signal requiring a change of the tool is issued. In response to the signal, an information requiring a change of the tool is displayed on the display device 26. Further, an alarm may be issued to stop the machining.

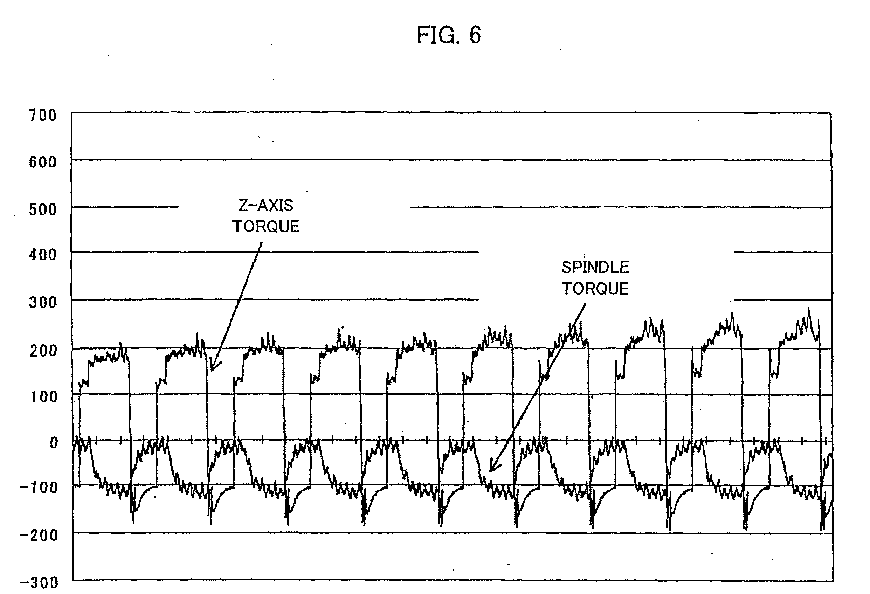

FIGS. 6-9 show translation of the waveforms of the estimated disturbance torques of the spindle motor and the Z-axis feed motor. The waveforms are obtained in drilling operations on a steel workpiece of S50C with a tool of a twisted drill made of high-speed steel coated by TiN having a diameter of 2.5mm. The drilling operations are performed on conditions: revolution speed of 3400 min$^{-1}$, feed rate of 0.1 mm/rev, depth of hole 10 mm, using cutting fluid of emulsion type.

The estimated disturbance torque is obtained by subtracting the load on the motor in idling from the load on the motor in machining, to measuring a substantial cutting torque.

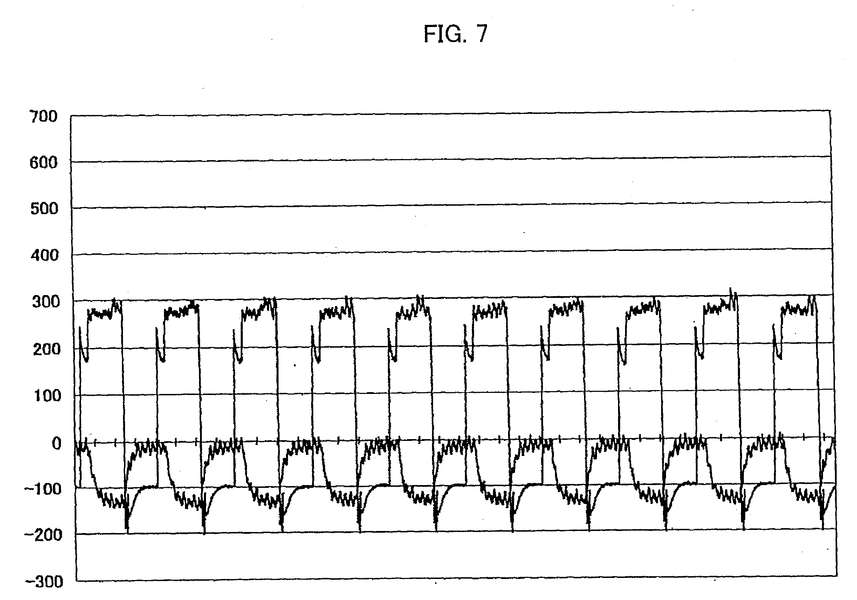

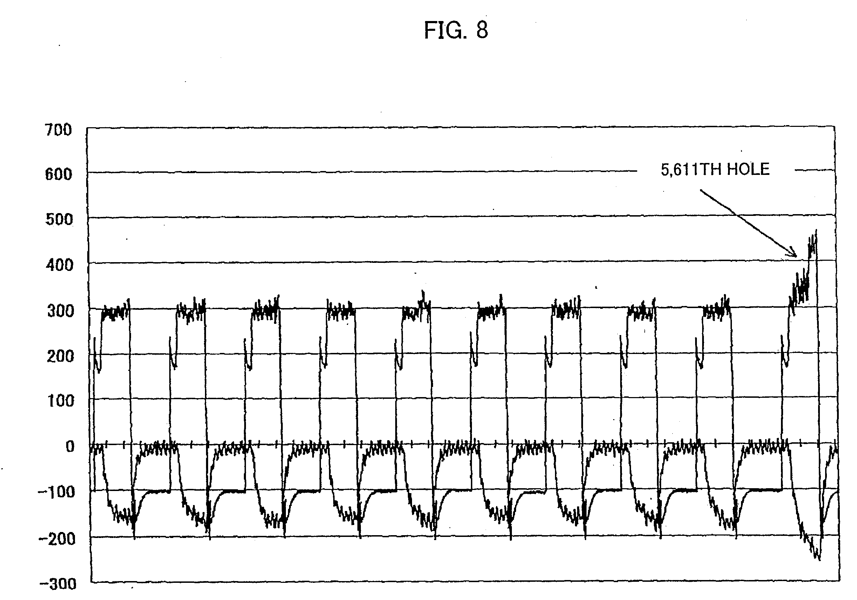

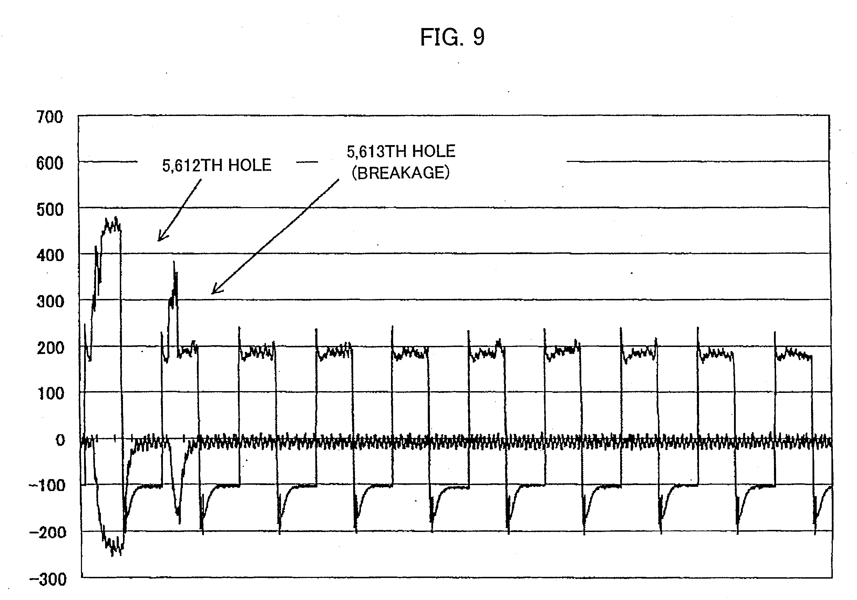

Each of FIGS. 6-9 shows the data in drilling ten holes of a series of machining. FIG. 6 shows the data at a beginning stage (2nd to 11th holes), FIG. 7 shows the data at a middle stage (2,992nd to 3,001st holes), FIG. 8 shows the data at a stage before the breakage (5,602nd to 5,611th holes) and the FIG. 9 shows the data at a state of termination (5,612th to 5,621st holes; breakage occurred at 5,613th hole). It can be seen that the absolute value of the estimated disturbance torques of the spindle motor and the Z-axis feed motor increase as the time lapses, i.e. the tool abrades from the transition of the waveforms.

The waveforms show that the absolute values of the estimated disturbance torques of the spindle motor and the Z-axis feed motor greatly increase at drilling of "5,611th" hole which is preceding a breakage of the tool at drilling of "5,613th" hole by two machining cycles, as clearly distinguished from the waveforms before the drilling of "5,611th" hole. By detecting the sharp increase of the estimated disturbance torques of the spindle motor and the Z-axis feed motor, the breakage of the tool is predicted and a signal requiring a tool change is issued at the "5,611th" hole or the "5,612th" hole before the breakage of the tool.

As described, the absolute value and the change of rate (gradient of trend of increase) of the estimated disturbance torque may be different in particular machining even in the same machining condition. According to the present embodiment, the threshold for discriminating an abnormality of the tool automatically varies in dependence on the previous disturbance torque in the preceding machining cycle, so that the characteristic change of the disturbance torque is precisely detected to cope with the particularity of the machining.

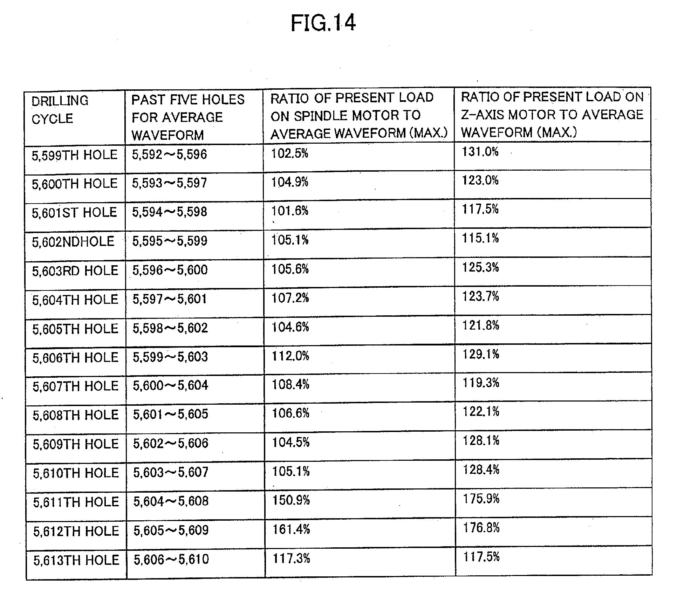

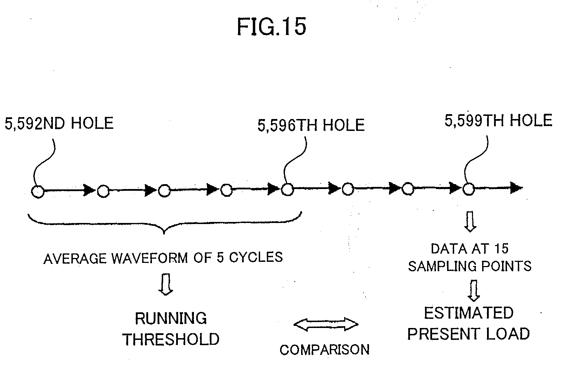

For the above example of drilling operation, as shown in FIG. 15, the running thresholds are determined based on averages of the data in past five machining cycles by setting the time periods T2 and T3 such that a period from a point of time preceding the present time by the time period T2 to a point of time preceding the present time by the time period T3 coincides with the past five drilling cycles. The table of FIG. 14 shows a result of comparison of the present loads with thus obtained averaged waveforms. For instance, in the drilling cycle for "5,599th" hole at the first line of the table of FIG. 14, running-average waveforms of the estimated disturbance torques of the spindle motor and the Z-axis motor are obtained in the past five drilling cycles between the drilling of "5,692nd" hole which is seven holes past and the drilling of "5,596th" hole which is three holes past. Respective averages of the estimated disturbance torques at corresponding fifteen sampling points (8ms × 15=120ms) in the five drilling cycles are calculated to determine the running average waveforms.

The estimated disturbance torque in the present drilling cycle is compared with the data of thus obtained running-average waveform at corresponding sampling points in one to one relation for the spindle motor and the Z-axis motor, so that a ratio of the present load to the running-average waveform is calculated at each sampling point. In the table of FIG. 14, only the maximum value of the ratio for each of the spindle motor and the Z-axis motor in each drilling cycle is shown.

In the same manner, the results of comparison at the subsequent drilling cycles are shown in the subsequent lines in the table of FIG. 14. The maximum value of the ratio of the estimated present load of the spindle motor to the running-average waveform is held at approximately 110% in the subsequent drilling cycles and suddenly rises to a value exceeding 150% at a drilling cycle of 5,611th hole which is two cycles prior to the breakage of the tool. Similarly, the maximum value of the ratio of the estimated present load of the Z-axis feed motor to the running-average waveform is held at approximately 130% and suddenly rises to a value exceeding 175% at the drilling cycle of 5,611th hole which is two cycles prior to the breakage of the tool.

In the above case, the running threshold for predicting a breakage of the tool is set to a value obtained by multiplying the running-average waveform by a coefficient of "1.5".

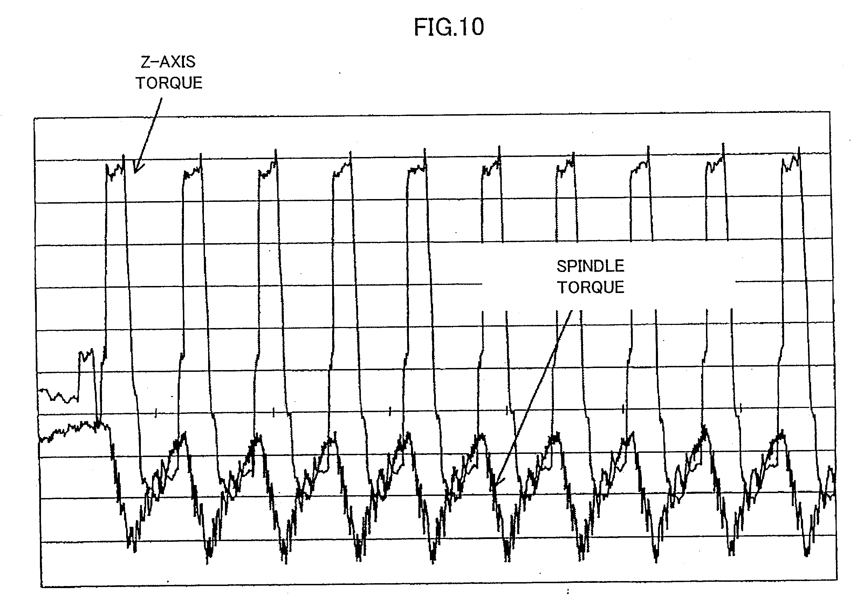

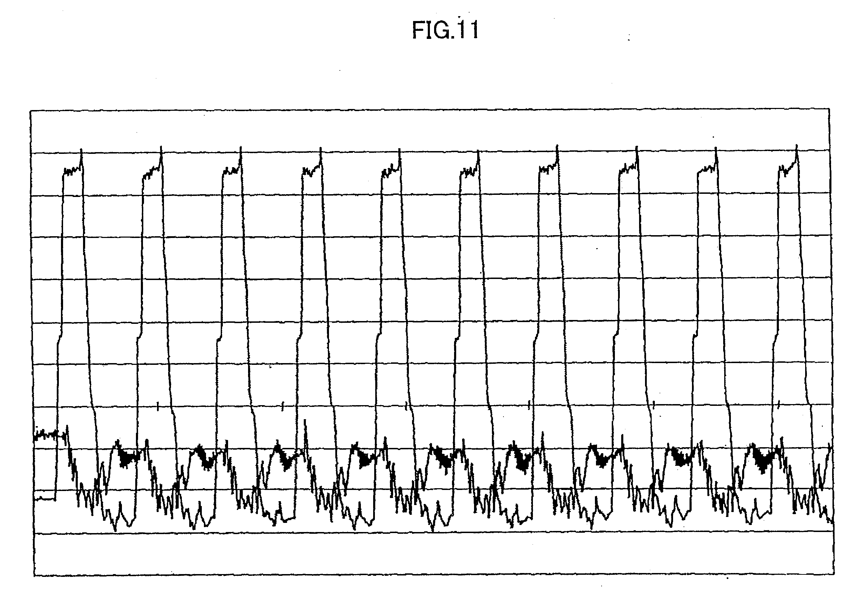

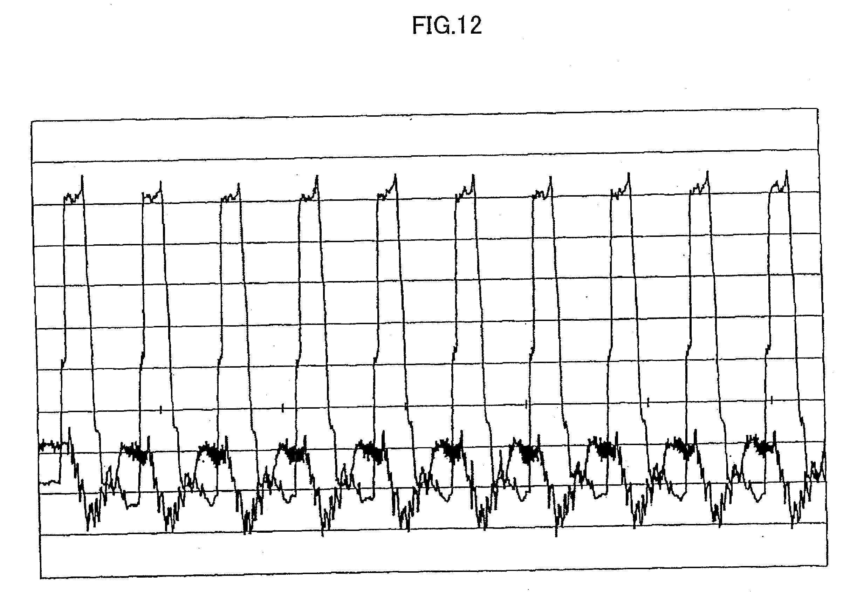

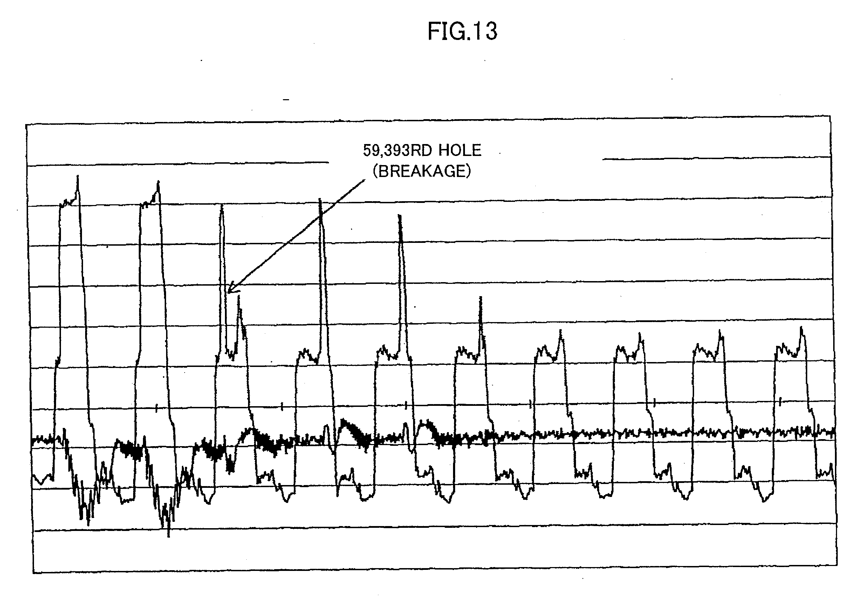

FIGS. 10 to FIG. 13 show variations of the estimated disturbance torques of the spindle motor and the Z-axis feed motor in a drilling operation by a cemented carbide drill of Φ2.5 mm with the other conditions same as those in the machining as shown in FIGS. 6-9. In this example, a breakage of the tool occurred at a drilling cycle of "59,393th" hole and any abnormality which may predict the breakage of the tool does not appear in the drilling cycles preceding the breakage of the tool. In this type of the breakage of the tool, it is preferable to set the running threshold for detecting the tool breakage to a range determined by setting an upper limit of +30% and a lower limit of -30% with respect to the running-average waveform.

With the running threshold thus determined, an breakage of the tool is immediately detected by determination of the estimated present load exceeds the lower limit, and thus a signal requesting a change of the tool is immediately issued, to reduce a downtime of the machine caused by a breakage of the tool to the minimum even in the case where any abnormality of the tool does not present before the breakage.

In the above description, the disturbance load acting on the spindle motor and the feed axis motor in machining is obtained as the estimated torque. Alternatively, a driving current or a driving power may be adopted as a value directly representing the cutting load. Further, in the case of machining, such as tapping, where the disturbance load varies with a relatively large amplitude in one machining cycle but a waveform pattern of the disturbance load in the repetitive machining cycles are substantially the same, the present load only at a predetermined sampling point in the machining cycle may be compared with the running threshold at the corresponding sampling point, to discriminate an abnormality of the tool.

According to the present embodiments, an abnormality of a tool at a breakage thereof or immediately before the breakage is automatically detected, so that the tool can be timely changed to a new one based on the detection of abnormality of the tool. Therefore, consumption of tools can be reduced by using each tool for its full life, and idle time in an operation of the machine is reduced by eliminating an inspection of an abnormality of the tool in each machining cycle, to improve productivity of machining.

The tool abnormality detecting device of the present embodiments can solve the following problems which have been strongly desired to be solved in a factory of machining.

(1) In a long-time automatic machining, a machining operation is stopped in response to an alarm of detecting a breakage of the tool occurs so as to prevent producing defective products by the broken tool until the breakage is recognized by an operator. Therefore, there is a long idle time until a restart of the machine.

(2) To cope with the above problem, there is known a method of incorporating an inspection process of inspecting a breakage of the tool using a touch sensor, etc. in the machining process and if a breakage of the tool is detected, the tool is changed to a new one. In this method a cycle time is elongated because of the inspection process.

(3) It is necessary to change a tool in use before a breakage thereof for safety in management of changing a tool on the basis of the number of machined workpieces which has been commonly carried out in a mass-production factory. Therefore, the number of machined workpiece as the basis of determination of changing the tool has to be set lower than the actual limit number of workpieces which can be machined by the tool for its full life, so that the tool with sufficient life remained has been wasted.

(4) The prediction of a breakage of the tool or the detection of the breakage immediately after its occurrence can prevent producing of defective products with scratches by the broken tool and wasting of a workpiece by the broken tool stuck in the workpiece.

(5) The threshold of the disturbance torque of the spindle motor and/or the feed axis motor for discrimination of a breakage of the tool is conventionally set to a constant value which has been predetermined in dependence on each machining condition on the basis of experiments or experience of the operator. The running threshold of the present embodiments is automatically determined based on an average or maximum the past disturbance loads in the machining in compliance with any machining condition, to eliminate the burdensome setting process of the threshold which has been conventionally required.

**Claims**

1.  A device for detecting an abnormality of a tool attached to a machine tool, comprising:

    cutting load detecting means for detecting a cutting load on a spindle motor and/or a cutting load on a feed axis motor in machining by the machine tool;
    present load presuming means for obtaining at least one of an average and a maximum of the cutting load detected by said cutting load detecting means in a first period as a presumed present load;
    threshold determining means for determining a running threshold based on at least one of an average and a maximum of the cutting load detected by said cutting load detecting means in a second period longer than the first period;
    discriminating means for discriminating an abnormality of the tool based on a comparison between the presumed present load with the running threshold.

2.  A device for detecting an abnormality of a tool according to claim 1, wherein said threshold determining means determines the running threshold by multiplying the average or the maximum of the cutting load for the second time period by a predetermined coefficient.

3.  A device for detecting an abnormality of a tool according to claim 1 or 2, wherein said threshold determining means determines the running threshold by adding/subtracting a predetermined value to/from the average or the maximum of the cutting load data for the second time period.

4.  A device for detecting an abnormality of a tool according to claim 2 or 3, wherein said threshold determining means determines the running threshold based on at least one of an average and a maximum of the cutting load from a point of time preceding a present time by a third period longer than the second period to a point of time preceding the present time by the second period.

5.  A device for detecting an abnomality of a tool according to any preceding claim, wherein said discriminating means comprises means for issuing a signal requiring a change of the tool based on discrimination of an abnormality of the tool.

6.  A device for detecting an abnormality of a tool according to any preceding claim, wherein said discriminating means discriminates an abnormality of the tool when the presumed present load exceeds the running threshold.

7.  A device for detecting an abnormality of a tool according to any preceding claim, wherein said discriminating means discriminates an abnormality of the tool when the presumed present load is lower than the running threshold.

8.  A device for detecting an abnormality of a tool according to any preceding claim, wherein said threshold determining means determines a first running threshold and a second running threshold smaller than said first running threshold, and said discriminating means discriminates an abnormality of the tool when the presumed present load exceeds the first running threshold or is less than the second running threshold.

9.  A device for detecting an abnormality of a tool attached to a machine tool, comprising:

    cutting load detecting means for detecting a cutting load on a spindle motor and/or a cutting load on a feed axis motor;

    present load presuming means for obtaining presumed present load;

    threshold determining means for determining a running threshold of a band range defined by setting an upper limit and a lower limit with respect to an average waveform of the cutting load in a plurality of machining cycles from respective starts to ends of machining preceding the present machining cycle; and

    discriminating means for discriminating an ab-

17 **EP 1 342 534 A2** 18

normality of the tool based on comparison of the presumed present load with the running threshold.

**10.** A device for detecting an abnormality of a tool according to claim 9, wherein said threshold determining means sets the upper limit and the lower limit by multiplying the average waveform of the cutting load by predetermined respective coefficients.

**11.** A device for detecting an abnormality of a tool according to claim 9 or 10, wherein said theshold determining means sets the upper limit and the lower limit by adding/subtracting predetermined respective values to/from the average waveform of the cutting load.

**12.** A device for detecting an abnormality of a tool according to claim 9, 10 or 11, wherein said discriminating means discriminates an abnormality of the tool when the presumed present load exceeds the upper limit of the running threshold or is less than the lower limit of the running threshold.

**13.** A device for detecting an abnormality of a to according to any preceding claim, wherein the tool is attached to a spindle of the machine tool.

**10**

FIG.1a

FIG.1b

FIG.1c

## FIG. 2

ONE MACHINING CYCLE

① PRESENT LOAD

② RUNNING-AVERAGE
WAVEFORM

③ UPPER THRESHOLD

④ LOWER THRESHOLD

## FIG. 3

# FIG. 4

# FIG. 5

```
            ┌─────────────┐
            │    START    │
            └──────┬──────┘
                   │
                   ▼
        ┌──────────────────────┐
        │  CALCULATE ys AND yz │
        │  AND STORE CALCULATED│  S1
        │  VALUES IN DATA TABLE│
        └──────────┬───────────┘
                   │
                   ▼
                  ╱ ╲               No
        S2      ╱ t0 LAPSED? ╲──────────────┐
                ╲           ╱                │
                  ╲ ╱                        │
                   │ Yes                     │
                   ▼                         │
        ┌──────────────────────┐            │
        │  CALCULATE ysav1 AND │            │
        │  yzav1 FROM POINT OF │  S3        │
        │  TIME PRECEDING BY   │            │
        │  T1 TO PRESENT       │            │
        └──────────┬───────────┘            │
                   │                         │
                   ▼                         │
        ┌──────────────────────────┐        │
        │ CALCULATE ysav23 AND     │        │
        │ yzav23 FROM POINT OF TIME│ S4     │
        │ PRECEDING BY T3 TO POINT │        │
        │ OF TIME PRECEDING BY T2  │        │
        └──────────┬───────────────┘        │
                   │                         │
                   ▼                         │
        ┌──────────────────────────┐        │
        │ DETERMINE RUNNING        │        │
        │ THRESHOLDS               │ S5     │
        │ ysth1, ysth1, ysth2,ysth2│        │
        └──────────┬───────────────┘        │
                   │                         │
                   ▼                         │
                  ╱ ╲                        │
                ╱     ╲            Yes       │
        S6    ╱ ysth2≦ysav1≦ysth1 ╲─────────┘
              ╲ AND yzth2≦yzav1≦  ╱
                ╲ zsth1?        ╱
                  ╲ ╱
                   │ No
                   ▼
        ┌──────────────────────┐
        │ ISSUE SIGNAL         │
        │ REQUIRING TOOL       │
        │ CHANGE AFTER         │  S7
        │ COMPLETING PRESENT   │
        │ MACHINING CYCLE      │
        └──────────┬───────────┘
                   │
                   ▼
            ┌─────────────┐
            │     END     │
            └─────────────┘
```

FIG. 6

EP 1 342 534 A2

FIG. 7

FIG. 8

5,611TH HOLE

EP 1 342 534 A2

FIG. 9

EP 1 342 534 A2

FIG.10

SPINDLE
TORQUE

Z–AXIS
TORQUE

FIG.11

FIG.12

# FIG.13

59,393RD HOLE
(BREAKAGE)

EP 1 342 534 A2

# FIG.14

| DRILLING CYCLE | PAST FIVE HOLES FOR AVERAGE WAVEFORM | RATIO OF PRESENT LOAD ON SPINDLE MOTOR TO AVERAGE WAVEFORM (MAX.) | RATIO OF PRESENT LOAD ON Z–AXIS MOTOR TO AVERAGE WAVEFORM (MAX.) |
|---|---|---|---|
| 5,599TH HOLE | 5,592~5,596 | 102.5% | 131.0% |
| 5,600TH HOLE | 5,593~5,597 | 104.9% | 123.0% |
| 5,601ST HOLE | 5,594~5,598 | 101.6% | 117.5% |
| 5,602NDHOLE | 5,595~5,599 | 105.1% | 115.1% |
| 5,603RD HOLE | 5,596~5,600 | 105.6% | 125.3% |
| 5,604TH HOLE | 5,597~5,601 | 107.2% | 123.7% |
| 5,605TH HOLE | 5,598~5,602 | 104.6% | 121.8% |
| 5,606TH HOLE | 5,599~5,603 | 112.0% | 129.1% |
| 5,607TH HOLE | 5,600~5,604 | 108.4% | 119.3% |
| 5,608TH HOLE | 5,601~5,605 | 106.6% | 122.1% |
| 5,609TH HOLE | 5,602~5,606 | 104.5% | 128.1% |
| 5,610TH HOLE | 5,603~5,607 | 105.1% | 128.4% |
| 5,611TH HOLE | 5,604~5,608 | 150.9% | 175.9% |
| 5,612TH HOLE | 5,605~5,609 | 161.4% | 176.8% |
| 5,613TH HOLE | 5,606~5,610 | 117.3% | 117.5% |

# FIG.15

5,592ND HOLE 5,596TH HOLE 5,599TH HOLE

AVERAGE WAVEFORM OF 5 CYCLES

⇩

RUNNING
THRESHOLD

⟺
COMPARISON

DATA AT 15
SAMPLING POINTS

⇩

ESTIMATED
PRESENT LOAD